# EUROPÄISCHE PATENTSCHRIFT

(11) **EP 1 141 765 B1**
(45) Veröffentlichungstag und Bekanntmachung des Hinweises auf die Patenterteilung: **24.07.2002**
(21) Anmeldenummer: 99964469.3
(22) Anmeldetag: 20.12.1999
(51) Int. Cl.: G02B 26/02

(54) **VORRICHTUNG ZUM OPTISCHEN ABTASTEN VON LICHTLEITERN UND DEREN VERWENDUNG**
DEVICE FOR OPTICALLY SCANNING LIGHT GUIDES AND USE THEREOF
DISPOSITIF DE BALAYAGE OPTIQUE POUR GUIDES D'ONDES ET SON UTILISATION

(30) Priorität: 21.12.1998 DE 19860284
(43) Veröffentlichungstag der Anmeldung: 10.10.2001
(73) Patentinhaber: LLA Umwelttechnische Analytik und Anlagen GmbH, 12489 Berlin (DE)
(72) Erfinder: LÖBE, Klaus, D-16547 Birkenwerder (DE); LUCHT, Hartmut, D-12524 Berlin (DE); KREUCHWIG, Lutz, D-16547 Zehlendorf (DE); PLESSNER, Mike, D-12349 Berlin (DE)
(74) Vertreter: Gross, Felix, Dr.
(86) Internationale Anmeldenummer: DE9904118
(87) Internationale Veröffentlichungsnummer: WO0037989

(56) Entgegenhaltungen:
- DE-A- 4 312 915
- US-A- 4 261 638
- US-A- 4 938 555
- US-A- 5 420 946
- GNEWUCH H ET AL: "FIBRE-OPTIC 1X6 SWITCH WITH SMOOTH TRANSMISSION SPECTRUM" SENSORS AND ACTUATORS A,CH,ELSEVIER SEQUOIA S.A., LAUSANNE, Bd. A45, Nr. 2, 1. November 1994 (1994-11-01), Seiten 109-114, XP000482615 ISSN: 0924-4247
- PATENT ABSTRACTS OF JAPAN vol. 008, no. 271 (P-320), 12. Dezember 1984 (1984-12-12) & JP 59 138930 A (TOSHIBA KK), 9. August 1984 (1984-08-09)

## Beschreibung

Die Erfindung betrifft Vorrichtungen zum optischen Abtasten von Lichtleitern gemäß dem Oberbegriff des Patentanspruchs 1, sowie eine Verwendung der Vorrichtung mit den Merkmalen des Anspruchs 12.

Mit der Entwicklung der Lichtleitertechnik entwickelten sich völlig neue Möglichkeiten, mehrere optische Meßköpfe über Lichtleiter an ein Spektrometer zu koppeln. Dabei war das Problem einer optimalen Lichtübertragung zu lösen, ohne daß eine Vermischung der Informationen von den einzelnen Meßköpfen geschieht.

Eine Ankopplung mehrerer Lichtleiter an ein Spektrometer ist aus der Patenschrift US 4,932,768 bekannt. Dabei werden die verschiedenen Lichtleiter in einer Reihe, parallel zum Eingangsspalt des Spektrometers angeordnet. In der Austrittsebene des Spektrometers wurde ein zweidimensionales Fotodetektorarray angeordnet. Bei einer stigmatischen Korrektur des Spektrometers entstehen auf dem Fotodetektorarray, entsprechend zur Anzahl der Lichtleitfasern im Eintrittsspalt, ein Stapel von Spektren, die über Bildverarbeitung getrennt ausgewertet werden können. Für den sichtbaren Wellenlängenbereich stehen derartige Detektorarrays zur Verfügung, so daß diese Technik auch bei Einbußen an Licht eingesetzt werden kann.

Für den infraroten Spektralbereich stehen für eine empfindliche Messung von Spektren allenfalls Zeilenkameras zur Verfügung. so daß eine derartige Lösung nicht tragfähig ist, Für diesen Bereich sind andere Techniken notwendig. Die Patentschrift DE 195 22 919 ordnet die Lichtleiter in der Eintrittsöffnung senkrecht zur Eintrittsspaltrichtung, parallel nebeneinander an. In der Austrittsebene des Spektrometers wird eine Detektorzeile angeordnet. Die Zuführung des Lichtes aus den einzelnen Lichtleitern erfolgt in zeitlicher Abstufung, Dazu ist vor dem Spektrometer ein optischer Umschalter angeordnet. Die von den Meßköpfen ankommenden Lichtleiter werden aufgetrennt und die entstehenden Enden auf einem Kreis in geringem Abstand gegenübergestellt. Durch eine rotierende Scheibe, mit einer für den Lichtdurchtritt ausgearbeiteten Öffnung, wird nun jeweils für eine kurze Zeit der Lichtweg für ein Faserpaar geöffnet. Da die Lichtleiter von dem Umschalter in der Eintrittsöffnung des Spektrometers nebeneinander angeordnet werden, ist die Wellenlängenzuordnung auf den Fotodetektoren für jeden Eingangslichtleiter unterschiedlich. Die Spektren sind durch die unterschiedliche Empfindlichkeit der Detektoren nicht mehr vergleichbar und die analytischen Ergebnisse sind unzuverlässig. Die Änderung der Lage der Eintrittsöffnung führt ferner zu einem Auflösungsverlust. Am optischen Umschalter entstehen erhebliche Lichtverluste, da nur ein geringer Lichtanteil von dem ankommenden Lichtleiter in den vom Umschalter wegführenden Lichtleiter gelangt.

Der Erfindung liegt daher die Aufgabe zugrunde, Vorrichtungen zu schaffen, bei denen die Lichtverluste gering sind, die eine hohe spektrale Auflösung aufweisen und bei denen sich die Spektren zu den Lichtsignalen aus den einzelnen Lichtleitern auf dem Detektorarray ohne Wellenlängenversatz decken.

Aus der US-A 4,938,555 ist ein optischer Schalter mit einem rotierbaren Konkavspiegel bekannt. Mit diesem Konkavspiegel soll aus einer Quelle einfallendes Licht auf mehrere Lichtempfänger umgelenkt werden. Die Quelle liegt dabei in der Drehachse des Konkavspiegels. Die Lichtempfänger sind unter einem Winkel größer Null-Grad in der Fokalebene des Konkavspiegels angeordnet. Um diese Lichtumlenkung zu ermöglichen, ist die Drehachse des Konkavspiegels exzentrisch zu der optischen Achse des Spiegels angeordent.

In der JP 59138930 wird ein System beschrieben, bei dem ein rotierbarer Spiegel einen Lichtstrahl auf einen Eintrittspalt eines Spektrometers lenkt. In dem Spektrometer ist ein Konkavgitter angeordnet, mit dem das einfallende Licht spektral zerlegt wird. Der Antrieb des rotierbaren Spiegels erfolgt diskontinuierlich.

Die Aufgabe des Gegenstandes gemäß des neuen Anspruchs 1 ist es, eine schnelle Abtastung und Umlenkung von mindestens zwei Lichtquellen mit einem rotierbaren Spiegel zu gewährleisten, wobei die Vorrichtung besonders effizient justierbar sein soll.

Diese Aufgabe wird erfindungsgemäß durch Vorrichtungen mit den Merkmalen des Anspruchs 1 gelöst.

Nachfolgend werden Ausführungsbeispiele anhand von Zeichnungen erläutert. Es zeigen:
- Fig. 1: eine schematisierte Darstellung einer Vorrichtung zum optischen Abtasten von Lichtleitern;
- Fig. 2: eine schematisierte Darstellung der Vorrichtung in einer Kunststoffsortieranlage.

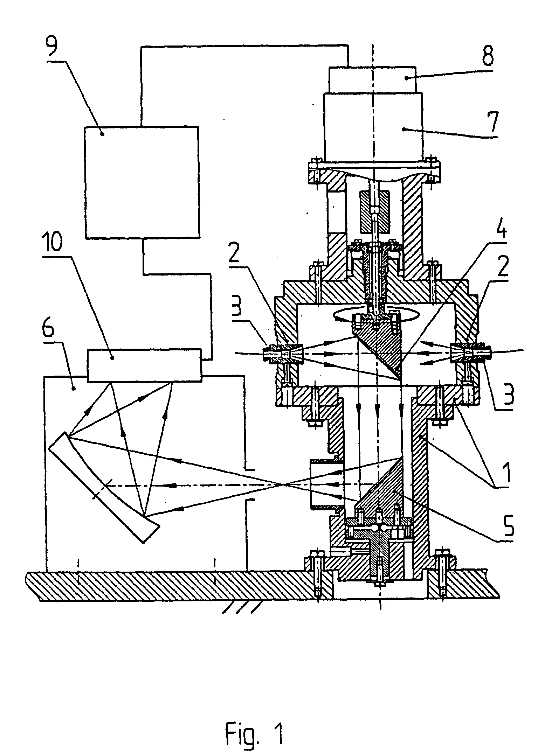

Bei der Ausführungsform gemäß Fig. 1 werden in einem rotationssymmetrischen Körper 1 Aufnahmen 2 für die Enden von sechzehn Lichtleitern 3 angeordnet, die von jeweils sechzehn optischen Meßköpfen kommen. Die Enden der Lichtleiter 3 haben zur Symmetrieachse des Körpers 1 gleiche Entfernung. In der Symmetrieachse des Körpers 1 ist ein rotierender parabolischer erster Konkavspiegel 4 angeordnet, dessen Drehachse sich mit der Symmetrieachse des Körpers 1 deckt. Dieser parabolische erste Konkavspiegel 4 ist auch unter der Bezeichnung off-axis Parabolspiegel bekannt. Der erste Konkavspiegel 4 wird von einem Motor 7 angetrieben. Der Motor 7 läuft mit einer Drehzahl von 20 Hz. Die Winkelstellungen des ersten Konkavspiegels 4 und des Motors 7 werden durch einen inkrementalen Geber 8 gemessen und der Steuerund Auswerteeinheit 9 übermittelt. Das Licht aus allen Lichtleitern 3 trifft sich in der Symmetrieachse des Körpers 1.

Für jeden Lichtleiter 3 hat der umlaufende erste Konkavspiegel 4 eine definierte Winkelstellung, bei der die optische Achse von einem Lichtleiter 3 mit der Symmetrieachse zum gespiegelten Licht in einer Ebene steht. In dieser Stellung wird das Licht über einen feststehenden parabolischen zweiten Konkavspiegel 5 aus der Symmetrieachse des Körpers 1 auf die Eingangsöffnung eines Spektrometers 6 gelenkt. Der erste Konkavspiegel 4 ist so berechnet und gefertigt, daß das divergente Licht vom Lichtleiter 1 kollimiert wird. Der zweite Konkavspiegel 5 ist so berechnet und gefertigt, daß das kollimierte Licht vom ersten Konkavspiegel 4 aus der Symmetrieachse des Abtastsystems auf die Eintrittsöffnung des Spektrometers fokussiert wird. Zu jedem Lichtleiter 3 gehört, wie bereits oben ausgeführt, eine Winkelstellung des umlaufenden ersten Konkavspiegels 4, bei der das Licht über den zweiten Konkavspiegel 5 exakt in die Eintrittsöffnung des Spektrometers 6 fokussiert wird. Winkel in unmittelbarer Nähe dieser Stellungen sind auch noch für eine Spektrenmessung brauchbar, wenn die Defokussierung noch gering ist. Beim Justieren des Systems wird jedem Lichtleiter 3 ein Winkelbereich zugeordnet, bei dem ausreichend Licht zum Spektrometer 6 gelangt. Signalisiert der inkrementale Geber der Auswerteeinheit 9 das Erreichen eines relevanten Winkelabschnittes, so wird eine Zeilenkamera 10 zur Messung der Spektren in der Austrittsöffnung des Spektrometers 6 aktiviert.

Mit der beschriebenen Anordnung kann alle 50 ms Licht von sechzehn Lichtleitern und den dazugehörigen Meßköpfen gemessen werden.

Das beschriebene Verfahren und die Vorrichtung ermöglichen eine zuverlässige, lichtstarke und schnelle spektralanalytische Auswertung von Licht verschiedener Lichtleiter und damit von verschiedenen Meßköpfen. Eine hohe Auflösung des Systems wird erreicht sowie ein Versatz der Spektren wird vermieden.

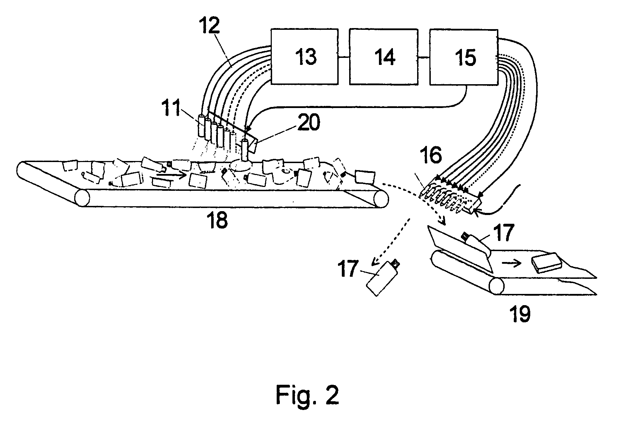

In Fig. 2 ist der Einsatz der erfindungsgemäßen Vorrichtung zum optischen Abtasten von Lichtleitkabel 12 (d.h. Lichtleitern) in einer Kunststoffsortieranlage zur Trennung von Kunststoffen nach der Sorte dargestellt. Kunststoffteile 17 werden auf einem ein Meter breiten Transportband 18 gleichmäßig aufgeschüttet und mit einer Geschwindigkeit von zwei Metern pro Sekunde bewegt. Eine Reihe von sechzehn faseroptischen Meßköpfen 11 ist über dem Transportband 18 senkrecht zur Förderrichtung angeordnet. Die Kunststoffteile 17, in dem vorliegenden Beispiel Flaschen und Becher aus dem Hausmüll, werden an diesen Meßköpfen 11 vorbeigeführt.

Zur Identifikation der Kunststoffsorte werden die Absorptionsbanden im nahen infraroten Spektralbereich gemessen, die für den jeweiligen Kunststoff charakteristisch sind. Jeder fiberoptische Meßkopf 11 ist optisch so eingestellt. daß ein Bereich mit einem Durchmesser von 60 mm auf dem Transportband 18 erfaßt wird.

Das von Halogenlampen 20 eingestrahlte Licht wird von den Kunststoffteilen 17 zurückgestreut und durch die Meßköpfe 11 aufgenommen. Durch sechzehn Lichtleitkabel 12 gelangt das Licht zur erfindungsgemäßen Vorrichtung 13 zum Abtasten der Lichtleitkabel 12. Die Vorrichtung 13 wird üblicherweise auch Multiplexer genannt, und wird der Reihe nach auf die Eintrittsöffnung eines NIR-Spektrometers 14 geschaltet. Bei Rotation des ersten Konkavspiegels 4 des Multiplexers 13 mit einer Frequenz von vierzig Hertz wird eine entsprechende Scanrate der Meßkopfzeile 11 erreicht. Bei sechzehn Meßköpfen 11 und einer Breite des Transportbandes 18 von einem Meter kann das Transportband 18 bis zu einer Geschwindigkeit von 2,4 Meter pro Sekunde noch lückenlos abgetastet werden.

Die spektralen Informationen vom NIR-Spektrometer 14 sowie die Signale von dem inkrementalen Geber vom Multiplexer 13 werden im Rechner der Systemsteuerung 15 zur Bestimmung der Lage der Kunststoffteile 17 auf dem Transportband 18 und zur Bestimmung der Kunststoffsorte genutzt. Die analytischen Ergebnisse, die in sechzehn Spuren durch die Meßköpfe erzeugt werden, werden fortlaufend zu Bildern zusammengesetzt. So wird ein Abbild der Lage und der Sorte der Kunststoffteile 17 auf dem Transportband 18 erzeugt. Auf Grundlage dieser Informationen werden pneumatische Ejektoren 16 gesteuert, die die Kunststoffteile 17, die am Ende des Transportbandes 18 in Wurfparabeln abgeworfen werden nach frei wählbaren Kriterien aus dem Materialstrom blasen. Die Restfraktion wird auf dem nächsten Band 19 weggefördert.

Bezugszeichenaufstellung
- 1: Körper
- 2: Aufnahmen für Lichtleiter
- 3: Enden der Lichtleiter
- 4: rotierender parabolischer erster Konkavspiegel
- 5: fest stehender parabolischer zweiter Konkavspiegel
- 6: Spektrometer
- 7: Motor
- 8: inkrementaler Geber
- 9: Steuer- und Auswerteeinheit
- 10: Zeilenkamera
- 11: Reihe von fiberoptischen Meßköpfen
- 12: Lichtleitkabel (insgesamt sechzehn)
- 13: Vorrichtung zum optischen Abtasten von Lichtleitern (Multiplexer)
- 14: NIR-Spektrometer
- 15: Systemsteuerung
- 16: pneumatische Ejektoren
- 17: Flaschen und Becher aus Kunststoff
- 18: Transportband
- 19: Band
- 20: Band von Halogenlampen

## Patentansprüche

1. Vorrichtung zum optischen Abtasten von Lichtleitern (3, 12) zur Lichtübertragung von mindestens einer Meßstelle (11) zu einer optischen Anordnung (6, 14),
**gekennzeichnet durch**
einen kontinuierlich rotierbaren ersten Konkavspiegel (4), welcher bei Rotation nacheinander das aus mindestens zwei Lichtleitern (3, 12) austretende Licht auf eine feststehende zweite Spiegeloptik (5) lenkt, deren optische Achse für das einfallende Licht sich mit der Rotationsachse des ersten Konkavspiegels (4) deckt, wobei die feststehende zweite Spiegeloptik (5) das Licht auf einen Ausgangslichtleiter oder eine Eingangsöffnung der optischen Anordnung (6, 14) fokussiert.

2. Vorrichtung nach Anspruch 1, **gekennzeichnet durch** einen Ausgangslichtleiter zum Empfang des umgelenkten Lichts und zur Weiterleitung des Lichts zur optischen Anordnung (6, 14).

3. Vorrichtung nach Anspruch 1 oder 2, **dadurch gekennzeichnet, daß** die optische Anordnung als spektroskopisches Analysengerät (6, 14) ausgebildet ist.

4. Vorrichtung nach mindestens einem der vorhergehenden Ansprüche, **dadurch gekennzeichnet, daß** die lichtaustrittsseitigen optischen Achsen der mindestens zwei Lichtleiter (3, 12) sich alle in einem Punkt schneiden, durch den die Rotationsachse des rotierbaren ersten Konkavspiegels (4) verläuft und daß die Lichtaustrittsenden aller Lichtleiter (3, 12) zum Schnittpunkt der optischen Achsen die gleiche Entfernung haben.

5. Vorrichtung nach mindestens einem der vorhergehenden Ansprüche, **dadurch gekennzeichnet, daß** der rotierbare erste Konkavspiegel (4) ein verspiegeltes Ellipsoid ist

6. Vorrichtung nach mindestens einem der vorhergehenden Ansprüche, **dadurch gekennzeichnet, daß** der rotierbare erste Konkavspiegel (4) mit einem Antriebsmotor verbunden ist, dessen jeweilige Winkelstellung durch eine elektronische Meßvorrichtung ermittelt wird.

7. Vorrichtung nach Anspruch 6, **dadurch gekennzeichnet, daß** jedem abgetasteten Lichtleiter (3, 12) ein Winkelbereich zuordbar ist und daß bei Durchfahren dieser Winkelbereiche elektronische Signale ableitbar sind, mit denen ein Steuermittel das spektroskopische Analysegerät (6, 14) zur Messung der Spektren synchron steuert.

8. Vorrichtung nach Anspruch 1, **dadurch gekennzeichnet, daß** die Lichtleiter als Lichtleitfasern ausgebildet sind, daß in einem rotationssymmetrischen Körper (1) Aufnahmen (2) für die Enden der Lichtleitfasern (3) angeordnet sind, daß der rotierbare erste Konkavspiegel parabolisch ist und um die Symmetrieachse des Körpers (1) rotierbar ist, daß die zweite Spiegeloptik (5) in der Symmetrieachse des Körpers (1) als parabolischer zweiter Konkavspiegel (5) fest angeordnet ist, und daß die optische Anordnung ein spektroskopisches Analysegerät, bestehend aus einem Spektrometer (6) und einer Spektrenkamera (10) ist.

9. Vorrichtung nach Anspruch 8, **dadurch gekennzeichnet, daß** der rotierbare parabolische erste Konkavspiegel (4) auf einer Achse mit einem Motor (7) angeordnet ist.

10. Vorrichtung nach Anspruch 9, **dadurch gekennzeichnet, daß** an dem Motor (7) ein inkrementaler Geber zur Messung der momentanen Winkelstellung angebracht ist.

11. Vorrichtung nach Anspruch 10, **dadurch gekennzeichnet, daß** zur Auswertung der Winkelstellungen von dem Geber sowie der Spektren vom spektroskopischen Analysegerät eine Steuer- und Auswerteeinheit (9) angeordnet ist.

12. Verwendung einer Vorrichtung nach mindestens einem der Ansprüche 1 bis 11 zur Charakterisierung von Kunststoffsorten in einer Kunststoffsortieranlage.

## Claims

1. Device for optically scanning light guides (3, 12) for transmitting light from at least one measuring point (11) to an optical array (6, 14),
**characterised by**
a continuously rotatable first concave mirror (4) which during rotation diverts the light exiting from at least two light guides (3, 12) in succession to a fixed second mirror lens (5) whose optical axis for the incoming light coincides with the rotational axis of the first concave mirror (4) wherein the fixed second mirror lens (5) focuses the light onto an output light guide or an input opening of the optical array (6, 14).

2. Device according to claim 1 **characterised by** an output light guide for receiving the deflected light and for sending the light onto the optical array (6, 14).

3. Device according to claim 1 or 2 **characterised in that** the optical array is formed as a spectroscopic analysis instrument (6, 14).

4. Device according to at least one of the preceding claims **characterised in that** the optical axes on the light output side of the at least two light guides (3, 12) all intersect at a point through which the rotational axis of the rotatable first concave mirror (4) runs and that the light outlet ends of all the light guides (3, 12) have the same distance from the intersection point of the optical axes.

5. Device according to at least one of the preceding claims **characterised in that** the rotatable first concave mirror (4) is a reflective ellipsoid.

6. Device according to at least one of the preceding claims **characterised in that** the rotatable first concave mirror (4) is connected to a drive motor whose angular position is each time determined by an electronic measuring device.

7. Device according to claim 6 **characterised in that** each scanned light guide (3, 12) can be associated with an angular region and that on passing through these angular regions electronic signals can be derived with which a control means controls in synchronisation the spectroscopic analysis instrument (6, 14) for measuring the spectra.

8. Device according to claim 1 **characterised in that** the light guides are designed as optical fibres, that sockets (5) are arranged in a rotationally symmetrical body (1) for the ends of the optical fibres (3), that the rotatable first concave mirror is parabolic and is able to rotate about the axis of symmetry of the body (1), that the second mirror lens (5) is mounted fixed in the axis of symmetry of the body (1) as a parabolic second concave mirror (5) and that the optical array is a spectroscopic analysis instrument, consisting of a spectrometer (6) and a spectra camera (10).

9. Device according to claim 8 **characterised in that** the rotatable parabolic first concave mirror (4) is mounted on an axis with a motor (7).

10. Device according to claim 9 **characterised in that** an incremental transmitter is attached to the motor (7) for measuring the momentary angular position.

11. Device according to claim 10 **characterised in that** a control and evaluator unit (9) is mounted for evaluating the angular positions of the transmitter and the spectra from the spectroscopic analysis instrument.

12. Use of a device according to at least one of claims 1 to 11 for characterising different sorts of plastics in a plastics sorting plant.

## Revendications

1. Dispositif de balayage optique de guides de lumière (3,12) pour la transmission de la lumière depuis au moins un emplacement de mesure (11) jusqu'à un dispositif optique (6,14),
**caractérisé par**
un premier miroir concave (4) qui peut tourner de façon continue et qui, lors de la rotation, fait dévier successivement la lumière sortant d'au moins deux guides de lumière (3,12), vers un second système optique fixe à miroir (5), dont l'axe optique pour la lumière incidente coïncide avec l'axe de rotation du premier miroir concave (4), le second système optique fixe à miroir (5) focalisant la lumière sur un guide de lumière de sortie ou sur une ouverture d'entrée du dispositif optique (6,14).

2. Dispositif selon la revendication 1, **caractérisé par** un guide de lumière de sortie permettant de recevoir la lumière déviée et de retransmettre la lumière vers le dispositif optique (6,14).

3. Dispositif selon la revendication 1 ou 2, **caractérisé en ce que** le dispositif optique est agencé sous la forme d'un appareil d'analyse spectroscopique (6,14).

4. Dispositif selon au moins l'une des revendications précédentes, **caractérisé en ce que** les axes optiques situés du côté de sortie de la lumière des au moins deux guides de lumière (3,12) se croisent tous en un point par lequel passe l'axe de rotation du premier miroir concave rotatif (4) et que les extrémités de sortie de la lumière de tous les guides de lumière (3,12) sont situées à la même distance du point d'intersection des axes optiques.

5. Dispositif selon l'une des revendications précédentes, **caractérisé en ce que** le premier miroir concave rotatif (4) est un ellipsoïde métallisé.

6. Dispositif selon au moins l'une des revendications précédentes, **caractérisé en ce que** le premier miroir concave rotatif (4) est relié à un moteur d'entraînement, dont la position angulaire respective est déterminée par un dispositif de mesure électronique.

7. Dispositif selon la revendication 6, **caractérisé en ce qu'**une plage angulaire peut être associée à chaque guide de lumière (3,12) exploré par balayage et que, lors du parcours de ces plages angulaires, des signaux électroniques peuvent être dérivés, signaux à l'aide desquels un moyen de commande commande d'une manière synchrone l'appareil d'analyse spectroscopique (6,14) pour la mesure des spectres.

8. Dispositif selon la revendication 1, **caractérisé en ce que** les guides de lumière sont agencés sous la forme de fibres formant guides de lumière, que dans un corps (1) à symétrie de révolution, des logements (2) sont prévus pour les extrémités des fibres formant guides de lumière (3), que le premier miroir concave rotatif est parabolique et peut tourner autour de l'axe de symétrie du corps (1), qu'un second système optique à miroir (5) est monté fixe sur l'axe de symétrie du corps (1) sous la forme d'un second miroir concave parabolique (5) et que le dispositif optique est un appareil d'analyse spectroscopique constitué par un spectromètre (6) et une caméra spectrale (10).

9. Dispositif selon la revendication 8, **caractérisé en ce que** le premier miroir concave parabolique rotatif (4) est monté sur un axe comportant un moteur (7).

10. Dispositif selon la revendication 9, **caractérisé en ce qu'**un générateur incrémental pour mesurer la position angulaire instantanée est monté sur le moteur (7).

11. Dispositif selon la revendication 10, **caractérisé en ce que** pour l'évaluation des positions angulaires du capteur ainsi que des spectres de l'appareil d'analyse spectroscopique, il est prévu une unité de commande et d'évaluation (9).

12. Utilisation d'un dispositif selon au moins l'une des revendications 1 à 11, pour caractériser des types de matières plastiques dans une installation de tri de matières plastiques.
